# EUROPÄISCHE PATENTSCHRIFT

(11) **EP 0 850 384 B1**
(45) Veröffentlichungstag und Bekanntmachung des Hinweises auf die Patenterteilung: **08.09.1999**
(21) Anmeldenummer: 96914063.1
(22) Anmeldetag: 29.04.1996
(51) Int. Cl.: F16P 3/12, E05F 15/00

(54) **VERFAHREN UND VORRICHTUNG ZUR STEUERUNG EINES VERSTELLOBJEKTS**
METHOD AND DEVICE FOR CONTROLLING A MOVABLE OBJECT
PROCEDE ET DISPOSITIF POUR LA COMMANDE D'UN OBJET DEPLA ABLE

(30) Priorität: 13.09.1995 DE 19533872
(43) Veröffentlichungstag der Anmeldung: 01.07.1998
(73) Patentinhaber: Brose Fahrzeugteile GmbH & Co. KG, 96450 Coburg (DE)
(72) Erfinder: BUSCHMANN, Robert, D-64372 Ober-Ramstadt 2 (DE); KESSLER, Michael, D-63069 Offenbach (DE); LINDNER, Gerhard, D-96450 Coburg (DE); BRÜTTING, Christian, D-95615 Marktredwitz (DE); EICHINGER, Jürgen, D-96450 Coburg (DE)
(74) Vertreter: Müller, Wolfram Hubertus, Dipl.-Phys.
(86) Internationale Anmeldenummer: DE9600809
(87) Internationale Veröffentlichungsnummer: WO9710468

(56) Entgegenhaltungen:
- EP-A- 0 560 047
- DE-A- 4 215 744
- US-A- 5 345 045
- US-A- 5 410 227
- US-A- 5 432 392

## Beschreibung

Die Erfindung betrifft ein Verfahren und eine Vorrichtung zur Steuerung eines von einer motorischen Antriebsheit betätigten Verstellobjekts, zum Beispiel einer Fensterscheibe, eines Schiebedaches oder dergleichen in einem Kraftfahrzeug, gemäß dem Oberbegriff der Patentansprüche 1 und 19. Sie ist besonders zur Verwendung als Kollisionsschutz geeignet und ermöglicht eine vereinfachte Anbringung von Sender und Empfänger an das Verstellobjekt.

Aus DE 42 15 744 A1 ist eine Vorrichtung zur Steuerung fremdkraftbetätigter Teile, wie zum Beispiel einer Fensterscheibe eines Kraftfahrzeugs, bekannt, die mittels eines als Sensor ausgebildeten elektrisch-mechanischen Wandlers (Aktuators) auf einer Kante des Verstellteils, zum Beispiel einer Fensterscheibe, akustische Oberflächenwellen (sogenannte Rayleigh-Wellen) erzeugen. Diese Kante steht mit der Kante des zu überwachenden Bereichs, zum Beispiel des Schließbereichs der Fensterscheibe, in wellenleitender Verbindung. Ein Empfänger auf der anderen Seite des zu überwachenden Bereichs mißt die Energie der einfallenden Oberflächenwellen und leitet die Meßsignale an eine elektronische Auswerteeinheit weiter.

Es ist auch vorgesehen, nur eine einstückige Sende-/Empfängereinheit zu verwenden, wobei am gegenüberliegenden Ende des zu überwachenden Bereichs ein Reflektor, zum Beispiel eine Kerbe in der Scheibenkante, angeordnet ist, die geeignet ist, einen hinreichend großen Teil der ausgesendeten Oberflächenwellenenergie zu reflektieren, so daß ein auswertbares Meßsignal in der Sende-/Empfänger-Einheit generiert wird. Aufgrund einer für den zu überwachenden Bereich ermittelten am Empfänger meßbaren Signaldämpfung durch Auskopplung von Oberflächenwellen-Energie bei Berührung der Ausbreitungsstrecke werden Rückschlüsse auf einen eventuell vorliegenden Kollisionsfall gezogen und die Bewegungsrichtung des Verstellteils gegebenenfalls in Richtung "Öffnen" umgekehrt.

Die in der obengenannten Schrift beschriebenen zu Oberflächenwellen-Erzeugung und Empfang notwendigen Keilwandler weisen jedoch den Nachteil auf, daß ihre Anbringung an der Objektkante nicht ganz einfach ist, da deren Richtcharakteristik umbedingt zu beachten ist. So kann ein Keilwandler stets nur in eine Ausbreitungsrichtung Oberflächenwellen erzeugen beziehungsweise aus einer Ausbreitungsrichtung empfangen. Von Nachteil ist auch, daß die Anwendung des Erfindungsprinzips auf der Basis von Keilwandlern aus Platzgründen deren ausschließliche Befestigung außerhalb des Sichtbereichs der Objektkante erfordert. Im Falle der Überwachung von Seitenscheiben bedeutet dies, daß die Keilwandler an der Scheibenunterkante angebracht werden. Der Bereich der Objektkante, an dem die Wandler befestigt sind, kann örtlich vom Überwachungsbereich durch eine ebenfalls dämpfend wirkende Dichtung getrennt sein. Dichtungseinflüsse können unter Umständen aber zu Fehlinterpretationen der Meßergebnisse führen.

Als Alternative zu Keilwandlern sind Scherschwinger oder Indigitalwandler verwendbar. Diese können direkt am Rand des zu überwachenden Bereichs befestigt werden. Die Herstellung solcher Wandler ist allerdings weit aufwendiger als die von Dickenschwingern.

Der Erfindung liegt die Aufgabe zugrunde, ein Verfahren und eine Vorrichtung der eingangs genannten Art zu schaffen, wodurch eine sichere Signalbewertung ohne störende Einflüsse gewährleistet und der Einsatz einfacher Dickenschwinger ermöglicht werden soll.

Erfindungsgemäß wird die Aufgabe durch die kennzeichnenden Merkmale der Ansprüche 1 und 19 gelöst. Die Unteransprüche geben Vorzugsvarianten der Erfindung an.

Dementsprechend befindet sich ein Modenwandler in Wirkverbindung zum zu überwachenden Bereich oder zu einem mit diesem akustische Oberflächenwellen leitend verbundenen Bereich, wobei der Modenwandler eine zum Überwachungsbereich hinlaufende Volumenwelle in eine Oberflächenwelle umwandelt und/oder eine zum Empfänger zurücklaufende Oberflächenwelle in eine Volumenwelle umwandelt. Als Modenwandler kommen periodisch angeordnete geometrische Strukturen zur Anwendung, deren Teilung der Wellenlänge λ der zu erzeugenden Oberflächenwelle entspricht. Solche geometrische Strukturen können beispielweise Lochreihen in der Nähe des zu überwachenden Bereichs, also der umlaufenden Kante einer Fensterscheibe beispielsweise, oder keilartige Ausformungen in der Scheibenkante selbst sein.

Es besteht aber auch die Möglichkeit, separate, das heißt zusätzliche Elemente am zu überwachenden Bereich oder dem mit diesem wellenleitend verbundenen Bereich anzubringen, um eine Modenkonversion von einer Volumenwelle in eine Oberflächenwelle oder umgekehrt zu bewirken. Beispielsweise können periodisch mit einer Teilung von etwa der Wellenlänge λ der Oberflächenwelle auf der Scheibenkante aufgeklebte, aufgedruckte, aufgesinterte oder aufgedampfte Strukturen verwendet werden, die wegen ihres sehr geringen Höhenaufbaus visuell kaum wahrnehmbar und auch im seitlichen Führungsbereich der Fensterscheibe nicht störend hervortreten.

Die Oberflächenwellenlänge des Wandlermaterials entspricht nicht exakt der Oberflächenwellenlänge der freien Glaskante aufgrund der sich unterscheidenen Grenzflächenbedingungen zwischen Glas/Luft einerseits und Glas/Wandler anderer seits.

Unter Volumenwellen sind Schallwellen zu verstehen, die sowohl Longitudinalkomponenten als auch Transversalkomponenten aufweisen, wobei ein Anteil üblicherweise überwiegt. Da Festkörper Schubspannungen übertragen, treten in ihnen neben Longitudinalwellen immer auch Transversalwellen auf.

Eine weitere Ausführungsform eines "separaten" Modenwandlers sieht eine Verbindung eines flachen Keils mit der umlaufenden Kante der Fensterscheibe vor, wobei in der gemeinsamen Berührungsfläche des Keils schlitzartige Aussparungen in einem geeigneten Neigungswinkel eingearbeitet sind, so daß nach Brechung der aus dem Scheibenkörper einlaufenden Volumenwellen hin zum Keil und Reflektion an dessen Aussparungen im wesentlichen parallel zur Scheibenkanten die Volumenwellen bei der Rückeinkopplung in die Scheibenkante in Oberflächenwellen konvertiert werden.

Die Modenkonversion am Modenwandler ist bei Bedarf stets in beide Richtungen möglich, das heißt, eine sich durch den Glaskörper der Fensterscheibe ausbreitenden Volumenwelle (insbesondere eine Longitudinalwelle) wird bei ihrem Auftreffen auf den in der Nähe der Scheibenkante oder der Scheibenkante selbst angeordneten Modenwandler in eine Oberflächenwelle (insbesondere eine Rayleighwelle) umgewandelt. Gelangt eine Oberflächenwelle in den Wirkungsbereich eines der obenbeschriebenen Modenwandler, so wird diese unter anderem in eine Volumenwelle konvertiert. Wegen der Dämpfungseigenschaften der betreffenden schwingungsleitenden Körper und wegen der Konversionsverluste sollten möglichst wenige Modenwandler innerhalb eines Weges der akusti schen Wellen zwischen Sender und Empfänger liegen.

Für den Fall, daß eine einteilige Sender-/Empfänger-Einheit zur Generierung und zum Empfang von Volumenwellen mittels eines einfachen Dickenschwingers vorgesehen sein sollte, ist die Anwendung nur eines Modenwandlers vorteilhaft. Er konvertiert die zum Überwachungsbereich hinlaufende Volumenwelle in eine Oberflächenwelle und die von einem Reflektor zurücklaufende Oberflächenwelle in eine vom Empfänger detektierbare Volumenwelle. Als Reflektoren eignen sich besonders schlitzartige Kerben mit annähernd senkrechten Flanken bezüglich des Verlaufs des Überwachungsbereichs, aber auch andere Unstetigkeitsstellen mit hinreichend gutem akustischen Reflektionsverhalten.

Sollten jedoch Sender und Empfänger (zur Generierung beziehungsweise zum Empfang von Volumenwellen) weit auseinanderliegen, so wird regelmäßig die Anwendung von zwei Modenwandlem erforderlich sein, die den Überwachungsbereich an seinen Enden flankieren.

Es besteht auch die Möglichkeit, Sender und Empfänger für unterschiedliche Moden der akustischen Wellen miteinander zu kombinieren, also einen Sender für Volumenwellen und einen Empfänger für Oberflächenwellen oder umgekehrt. Entsprechend wäre ein Modenwandler zwischen dem Überwachungsbereich und dem Empfänger beziehungsweise zwischen dem Sender und dem Überwachungsbereich vorzusehen.

Besonders vorteilhaft läßt sich die Erfindung als sogenannter Einklemmschutz für Fensterscheiben in Kraftfahrzeugen verwenden. Hierbei wird ein Überwachungsbereich definiert, der alle diejenigen Kanten der Fensterscheibe umfaßt, die beim Öffnen der Scheibe einen Spalt mit der Karosserie bilden. Bei den vorderen Fensterscheiben ist zumeist die Überwachung der oberen, gewölbten Scheibenkante ausreichend. Die Fensterscheiben im Fond besitzen oft eine trapezähnliche Kontur, so daß beim Öffnen eine der im wesentlichen senkrecht verlaufenden Kanten einen einklemmgefährdeten Bereich freigibt. Deshalb muß zusätzlich auch diese Kante überwacht werden.

Die nicht zu überwachenden Bereiche der umlaufenden Scheibenkante können zur Anbringung von Sender und Empfänger verwendet werden. Dabei sollte der einem Modenwandler zugewandte Sender beziehungsweise Empfänger eine Position relativ zum Modenwandler haben, so daß der Modenwandler bezüglich des Senders beziehungsweise der Empfänger bezüglich des Modenwandlers in der Hauptausbreitungsrichtung der akustischen Welle liegt.

Bei der Gestaltung von Modenwandlern und Reflektoren in der äußeren Kontur der Fensterscheibe oder in unmittelbarer Nähe der Scheibenkante können auch Maßnahmen getroffen werden, die ein Ertasten nicht erlauben oder einen visuell störenden Eindruck vermeiden. Beispielsweise kann dies durch Ausfüllen der Kerben, Schlitze oder Löcher mittels eines Materials erfolgen, dessen akustische Eigenschaften sich von denen des Grundmaterials (zum Beispiel des Glaskörpers der Fensterscheibe) wesentlich unterscheiden.

Die Ecken der zueinander winklig stehenden Scheibenkanten sind mit einem so ausreichend großen Winkel ausgeführt, daß sie keine (unerwünschte) Modenkonversion auslösen.

Obgleich sich die Erfindungsbeschreibung im Konkreten ausschließlich mit einer Anwendung für verstellbare Fensterscheiben eines Kraftfahrzeugs beschäftigt, sei an dieser Stelle auf den allgemeinen Charakter des Erfindungsgedankens hingewiesen, der Anwendungen auch außerhalb der Kraftfahrzeugtechnik als praktikabel erscheinen läßt. So ist bespielsweise auch die Steuerung einer drehbaren Platte in Abhängigkeit vom Kontakt ihrer äußeren umlaufenden Kante, die mittels reflektierender und zugleich für Oberflächenwellen teildurchlässigen Kerben in Sektoren unterteilt ist, möglich, wobei eine Sender-/Empfänger-Einheit in einer axialen Ausnehmung platziert werden kann, der an der äußeren umlaufenden Kante ein Modenwandler zuzuordnen wäre.

Weitere Kombinationen von Sender, Empfänger, Modenwandlern und gegebenenfalls Reflektoren sind unter Berücksichtung der erfindungsgemäßen Mittel-Wirkungsbeziehungen und der anwendungsspezifischen Bedürfnisse frei wählbar.
- Figur 1: Blockschaltbild der Ausbreitung und Wandlung einer mechanischen Welle zwischen Sender und Empfänger unter Verwendung jeweils eines Modenwandlers an den Rändern des zu überwachenden Bereichs;
- Figur 2: Blockschaltbild der Ausbreitung und Wandlung einer mechanischen Welle zwischen Sender und Empfänger unter Verwendung eines Modenwandlers zwischen dem zu überwachenden Bereich und dem Empfänger;
- Figur 3: Blockschaltbild der Ausbreitung und Wandlung einer mechanischen Welle zwischen Sender und Empfänger unter Verwendung eines Modenwandlers zwischen dem Sender und zu überwachenden Bereich;
- Figur 4: wie Figur 3, jedoch zusätzlich mit einem Reflektorim Weg der Wellenausbreitung zwischen dem zu überwachenden Bereich und dem Empfänger;
- Figur 5: Blockschaltbild der Ausbreitung und Wandlung einer mechanischen Welle zwischen Sender und Empfänger mit einer einstückig ausgebildeten Sender-/Empfänger-Einheit und einem in zwei Richtungen von der Welle durchlaufenen Modenwandler;
- Figur 6: schematische Darstellung der Wellenausbreitung und Modenumwandlung im Material einer Fensterscheibe eines Kraftfahrzeugs gemäß dem in Figur 5 dargestellten Prinzip, wobei
- Figur 6a: den Weg der vom Sender ausgehenden Welle bis zum Reflektor zeigt und
- Figur 6b: den Weg der reflektierten Welle bis zum Empfänger zeigt;
- Figur 7: schematische Darstellung der Wellenausbreitung und Modenumwandlung im Material einer Fensterscheibeeines Kraftfahrzeugs gemäß dem in Figur 3 dargestellten Prinzips, wobei der Sender Volumenwellenerzeugt und der Empfänger auf den Empfang von Oberflächenwellen eingestellt ist;
- Figur 8: schematische Darstellung der Wellenausbreitung und Modenumwandlung im Material einer Fensterscheibeeines Kraftfahrzeugs gemäß dem in Figur 2 dargestellten Prinzips, wobei der Sender Oberflächenwellen erzeugt und der Empfänger auf den Empfang von Volumenwellen eingestellt ist;
- Figur 9: wie Figur 6, jedoch mit zwei den zu überwachendenBereich begrenzenden Reflektoren und einem dazwischen angeordneten, von einer Lochreihe gebildetenModenwandler, wobei
- Figur 9a: den Weg der vom Sender ausgehenden Welle bis zu den Reflektoren zeigt und
- Figur 9b: den Weg der reflektierten Welle bis zum Empfänger zeigt;
- Figur 10a: wie Figur 9a, jedoch mit einem von einer Keilreihe gebildeten Modenwandler;
- Figur 10b: wie Figur 9b, jedoch mit einem von einer Keilreihe gebildeten Modenwandler;
- Figur 11a: schematische Darstellung der Wellenausbreitungund Modenumwandlung im Material einer Fensterscheibe eines Kraftfahrzeugs gemäß dem in Figur 5 dargestellten Prinzips, mit zwei Modenwandlernunterschiedlichen Aufbaus an den Rändern des zu überwachenden Bereichs;
- Figur 11b: Blockschaltbild der Ausbreitung und Wandlung einer mechanischen Welle zwischen Sender und Empfänger gemäß der schematischen Darstellung von Figur 11a;
- Figur 11c: zeigt einen Ausschnitt aus der Fensterscheibe gemäß Figur 11a, jedoch mit einer zur Scheibenkante schräg gestellten Lochreihe des Modenwandlers;
- Figur 12: Ausschnitt aus einer Glasscheibe mit einer periodischen Lochstruktur als Modenwandler im Glaskörper in der Nähe der Scheibenkante;
- Figur 13: Ausschnitt aus einer Glasscheibe mit einer periodischen Kerbenstruktur als Modenwandler in der Scheibenkante des Glaskörpers;
- Figur 14: Ausschnitt aus einer Glasscheibe mit einer periodischen Oberflächenstruktur als Modenwandler, gebildet von auf die Scheibenkante geklebten Elementen;
- Figur 15: Ausschnitt aus einer Glasscheibe mit einer periodischen Struktur von Reflexionselementen in einem auf die Scheibenkante aufgesetzten Keil als Modenwandler;
- Figur 16: Prinzipdarstellung eines Dicken-Scher-Schwingerszur Erzeugung von Oberflächenwellen;
- Figur 17: Prinzipdarstellung eines kammförmigen Dickenschwingers zur Erzeugung von Oberflächenwellen;
- Figur 18: Prinzipdarstellung eines Interdigitalwandlerszur Erzeugung von Oberflächenwellen und der Einkopplung in die Scheibenkante.
- Figur 19: schematische Darstellung einer Vorrichtung zur Drehwinkelerkennung mit Kerben oder Spalten als Reflektoren;
- Figur 20: schematische Darstellung einer Vorrichtung zur Drehwinkelerkennung ohne Reflektoren mittels Laufzeitauswertung.

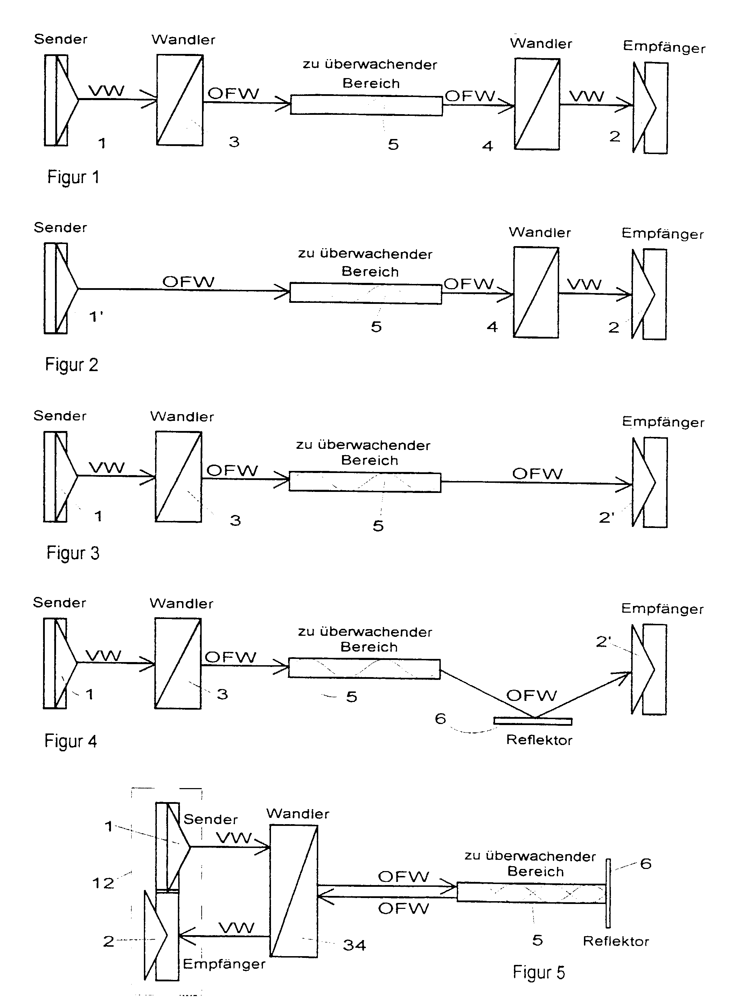

Das Blockschaltbild von Figur 1 verwendet einen Sender 1 zur Generierung von Volumenwellen, die sich in einem akustische Wellen leitenden Körper, zum Beispiel im Glaskörper einer Fensterscheibe, bis zum Erreichen eines Modenwandlers 3 ausbreiten. Dieser in Wirkverbindung mit dem zu überwachenden Bereich 5 stehende Modenwandler 3 wandelt die Energie der Volumenwellen zu einem großen Teil in Oberflächenwellen um. Da sich die Oberflächenwellen in der Grenzschicht des betreffenden Körpers ausbreiten, kann durch Berührung dieser Grenzschicht Energie ausgekoppelt werden, was zu einer meßbaren Signaldämpfung führt. Am Ende des zu überwachenden Bereichs 5 befindet sich ein zweiter Modenwandler 4 zur Rückwandlung der eintreffenden Oberflächenwellen in Volumenwellen, die sich in Richtung des separaten Empfängers 2 ausbreiten. Durch Auswertung von Sende- und Empfangssignal kann daraus geschlossen werden, ob ein Körper mit dem zu überwachenden Bereich 5 in Berührung gekommen ist oder nicht. Eine Auswertelogik sorgt für eine entsprechende Reaktion, zum Beispiel für eine Umkehrung der Stellbewegung eines Antriebes.

Figur 2 zeigt ein Blockschaltbild mit nur einem Modenwandler 4 zwischen zu dem zu überwachenden Bereich 5 und dem Empfänger 2 zur Konversion von Oberflächenwellen in Volumenwellen. Der Sender 1' erzeugt die Oberflächenwellen direkt an einem Ende des zu überwachenden Bereichs 5 oder auf einer Grenzfläche, die mit dem überwachenden Bereich 5 wellenleitend in Verbindung steht. Sender 1' und Empfänger 2' sind wiederum als separate Bauelemente ausgeführt und an den Rändern des zu überwachenden Bereichs 5 angeordnet.

Die Figuren 3 und 4 verwenden wiederum Volumenwellen erzeugende Sender 1, denen in Wirkbeziehung zum zu überwachenden Bereich 5 ein Modenwandler 3 zur Konversion von Volumenwellen in Oberflächenwellen zugeordnet ist. Als Empfänger 2' sind mechanisch-elektrische Wandler vorgesehen, die Oberflächenwellen sensieren können und am Ende des zu überwachenden Bereichs 5 oder auf einer mit diesem Bereich 5 wellenleitend verbundenen Grenzfläche angeordnet sind. Gemäß Figur 4 ist im Ausbreitungsweg der Oberflächenwelle zusätzlich ein Reflektor 6 vorgesehen, der, zum Beispiel in Form einer Kerbe oder eines Schlitzes, in die Kante einer Fensterscheibe eingearbeitet sein kann.

Die in Figur 5 dargestellte Erfindungsvariante verwendet eine einteilige Sender-/Empfänger-Einheit 12, bestehend aus Sender 1 und Empfänger 2. Wenn Sende- und Empfangsmodus zeitversetzt erfolgen, so kann für Sender 1 und Empfänger 2 ein und derselbe Dickenschwinger verwendet werden. Er würde abwechselnd Volumenwellen erzeugen und empfangen. Dieser Sender-/Empfänger-Einheit ist ein gemeinsamer Modenwandler 34 zugeordnet, der in zwei Ausbreitungsrichtungen arbeitet. Zunächst konvertiert der Modenwandler 34 die im Sendemodus erzeugten Volumenwellen in eine Oberflächenwelle, welche sich entlang des zu überwachenden Bereichs 5 bis zum Erreichen des Reflektors 6 ausbreitet. Nach ihrer Reflektion und Rücklauf entlang des Bereichs 5 wird die reflektierte Oberflächenwelle zurück in eine Volumenwelle konvertiert, die bei Erreichen des Empfängers 2 (beziehungsweise des einstückigen Wandlers während des Empfangsmodus) sensiert wird.

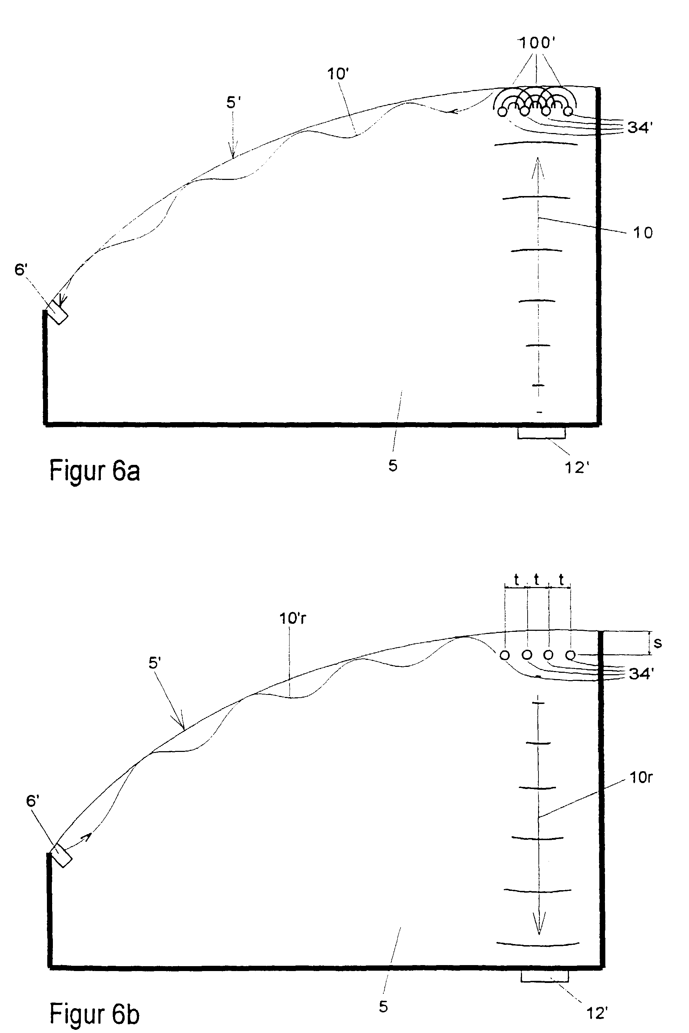

Die Figuren 6 bis 11 zeigen verschiedene technische Ausführungsbeispiele, die an die Bedürfnisse eines Einklemmschutzes für fremdkraftbetätigte Fensterscheiben von Kraftfahrzeugen angepaßt sind. Prinzipiell können diese Varianten aber auch zur Steuerung anderer Verstellobjekte Anwendung finden. Selbstverständlich kann die Erfindung auch im Zusammenhang mit anderen, akustische Wellen leitenden Materialen, zum Beispiel Stahl, zum Einsatz kommen.

In Figur 6a ist schematisch die Wellenausbreitung und Modenwandlung im Material einer Fensterscheibe 5 eines Kraftfahrzeugs dargestellt. Die von der Sender-/Empfänger-Einheit ausgehende Volumenwelle mit der Ausbreitungsrichtung 10 erreicht in der Nähe der Scheibenoberkante (zu überwachender Bereich 5') den aus einer Lochreihe bestehenden Modenwandler 34'. Beim Durchgang der Volumenwelle durch den gitterartigen Modenwandler 34' entsteht an jedem Spalt eine Elementarwelle 100', deren Überlagerung an der Scheibenoberkante 5' schließlich zur Entstehung von Oberflächenwellen führt. Von dem an dem einen Ende des zu überwachenden Bereichs 5' angeordneten Modenwandler 34' breitet sich die Oberflächenwelle entlang ihres Weges 10' bis zu einem als Kerbe 6' ausbildeten Reflektor aus.

Figur 6b zeigt den Weg 10'r der zurücklaufenden Oberflächenwelle, die bei Erreichen des Modenwandler 34' in eine Volumenwelle konvertiert wird und mit der Ausbreitungsrichtung 10r auf die Sender-/Empfänger-Einheit zuläuft. Wenn sich die Sender-/Empfänger-Einheit 12' im Empfangsmodus befindet, kann die Energie der eintreffenden Volumenwelle sensiert und in einem Mikrocontroller im Vergleich mit der Sendeenergie der Grad der akustischen Dämpfung festgestellt werden. Bei Überschreitung eines vorher festgelegten oder eines dynamisch an die konkreten Bedingungen des Verstellsystems angepaßten Grenzwertes unterbricht die Auswertelogik die Aufwärtsbewegung der Fensterscheibe und leitet gegebenfalls eine Reversierbewegung ein. Dadurch wird sichergestellt, daß ein eventuell eingeklemmter Gegenstand beziehungsweise ein eingeklemmtes Körperteil wieder freigegeben wird.

Um einen hohen Wirkungsgrad des Modenwandlers 34' zu erzielen, ist darauf zu achten, daß die Teilung t der einzelnen Löcher der Lochreihe, also deren Abstand zueinander, möglichst exakt der Wellenlänge λ der zu erzeugenden Oberflächenwellen im Glas entspricht. Der Abstand s des Modenwandlers 34' vom zu überwachenden Bereich 5' sollte experimentell bestimmt werden. Er ist dann ideal, wenn die Überlagerung der Elementarwellen 100' zu einer maximalen Entstehung von Oberflächenwellen führt.

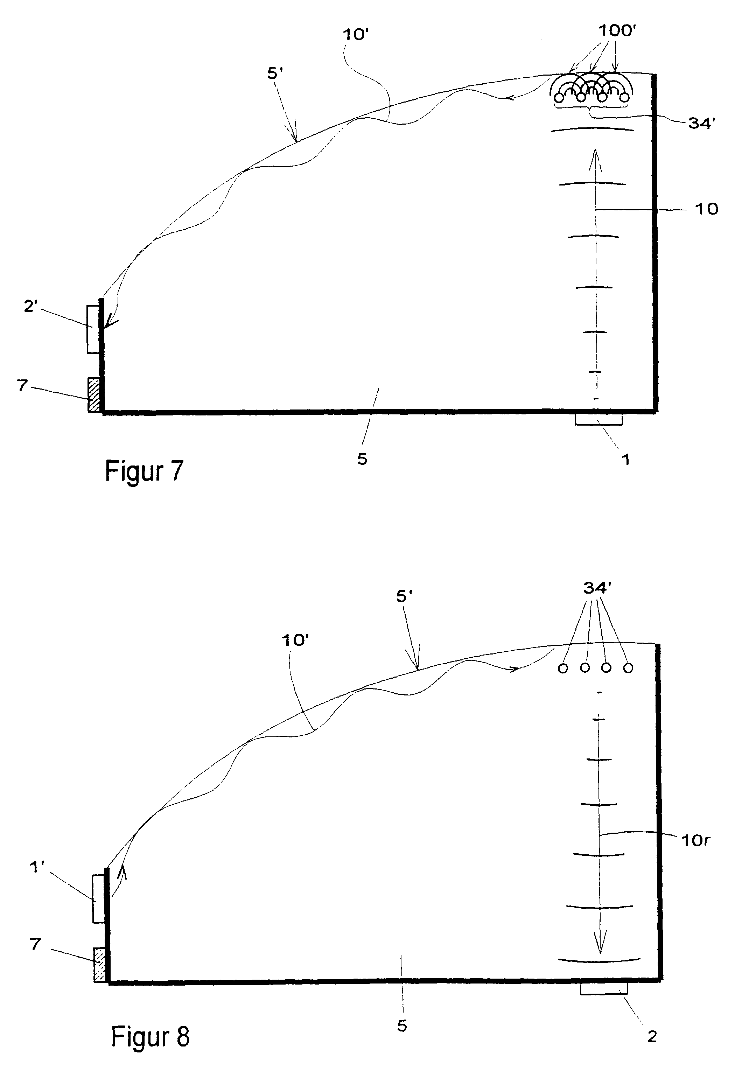

Während das Ausführungsbeispiel der Figuren 6a und 6b dem Blockschaltbild von Figur 5 entspricht, arbeitet die Variante von Figur 7 analog dem im Blockschaltbild von Figur 3 dargestellten Prinzip. Dementsprechend sind Sender 1 und Empfänger 2' (Figur 7) räumlich voneinander getrennt. Der Sender 1 ist (in Analogie zu Figur 6) wiederum an der unteren Scheibenkante gegenüber dem Modenwandler 34' angeordnet und vorzugsweise als einfacher Dickenschwinger ausgebildet. Die von ihm ausgehende Volumenwelle wird beim Übergang durch den Modenwandler in eine Oberflächenwelle konvertiert, die bei Erreichen des am anderen Ende des zu übertragenden Bereichs 5 plazierten Empfängers 2' sensiert wird.

Durch die Anordnung des Empfängers 2' an der seitlichen, vertikal verlaufenden Scheibenkante liegt er innerhalb des Führungsprofils des (nicht dargestellten) Fensterrahmens und bleibt somit unsichtbar. Wenn der Empfänger 2' von einem hinreichend stabilen Gehäuse eingefaßt ist, dann kann dieser zusammen mit einem weiteren auf der seitlichen Scheibenkante angeordneten Führungselement 7 Führungsaufgaben innerhalb des zugehörigen Teils des Fensterrahmens übernehmen.

Figur 8 zeigt eine Erfindungsvariante, die in Analogie zum Blockschaltbild von Figur 2 arbeitet und sich von der Variante gemäß Figur 7 nur dadurch unterscheidet, daß an der seitlichen, vertikal verlaufenden Scheibenkante ein Sender 1' für Oberflächenwellen und an der unteren Scheibenkante ein Empfänger für Volumenwellen vorgesehen ist. Der Modenwandler 34' wird also (im Vergleich zu Figur 7) aus der entgegengesetzten Richtung von einer akustischen Welle durchlaufen: dabei wird die Oberflächenwelle in eine Volumenwelle konvertiert.

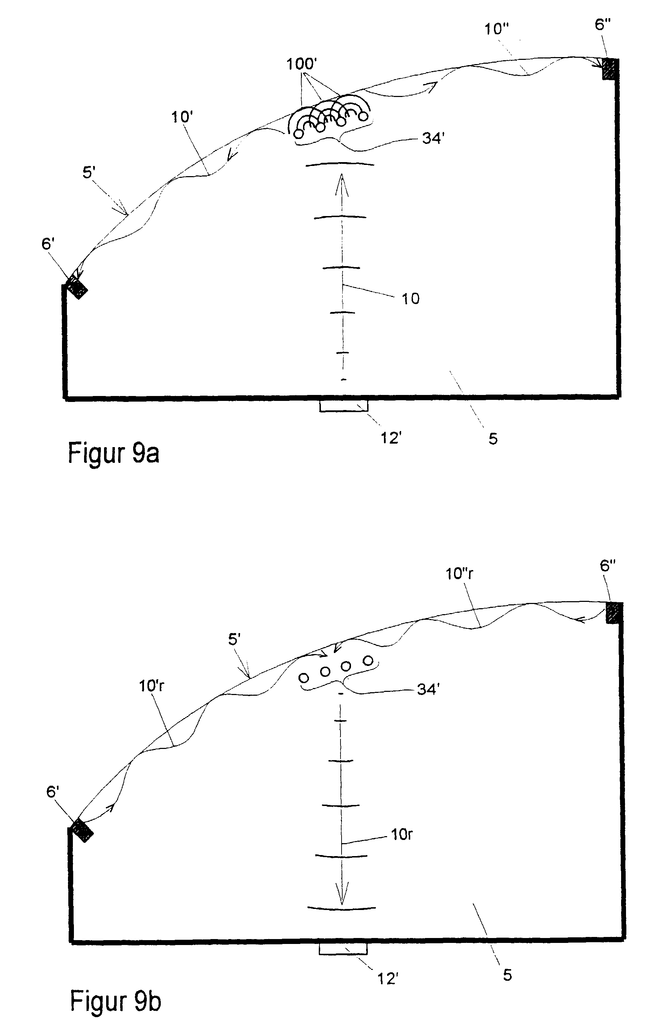

Bei der Ausführungsvariante der Figuren 9a und 9b teilt der Modenwandler 34' den zu überwachenden Bereich 5' in einen linksseitigen und einen rechtsseitigen Abschnitt, wobei deren äußere, an die vertikalen Scheibenkanten angrenzenden Ränder von jeweils einer Kerbe 6', 6" flankiert sind, die als Reflektoren für die vom Modenwandler 34' ausgehenden Oberflächenwellen fungieren. Die an der Scheibenunterkante unterhalb des Modenwandlers 34' plazierte Sender-/Empfänger-Einheit 12' arbeitet zyklisch im Sendebeziehungsweise Empfangsmodus, wobei Volumenwellen erzeugt beziehungsweise empfangen werden. Im übrigen gilt das in Zusammenhang mit den Figuren 6a und 6b Beschriebene analog für die Figuren 9a und 9b.

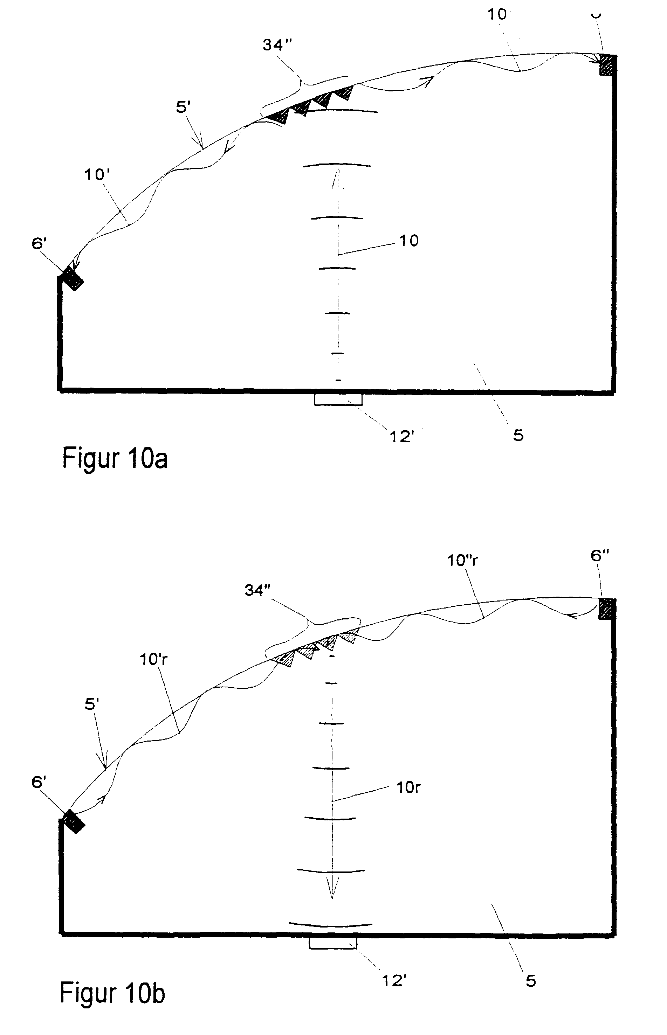

Die Erfindungsvariante der Figuren 10a und 10b unterscheidet sich von der Variante gemäß den Figuren 9a und 9b ausschließlich durch die Art des Modenwandlers 34", der direkt in die Kontur des zu überwachenden Bereichs 5', und zwar in Form einer Reihe keilartiger Vertiefungen, eingearbeitet wurde. Die Teilung der einzelnen Vertiefungen entspricht, wie auch bei der Lochreihe 34', der Wellenlänge λ der zu erzeugenden Oberflächenwelle. Ihre Tiefe d sollte bei symmetrischer Kerbenform d ≈ λ/2 betragen. Bei symmetrischer Gestaltung der periodischen Einkerbungen ist der Modenwandler 34" gleichermaßen zur Generierung wie auch zum Empfang von Oberflächenwellen zum Zwecke der Modenkonversion geeignet. Bei asymmetrischer Ausbildung der Einkerbungen, zum Beispiel indem eine der Keilflanken einen flacheren Winkel mit der oberen Scheibenkante einschließt als die andere Keilflanke, erfolgt die Generierung der Oberflächenwelle in Richtung des flacheren Winkels bevorzugt. Aus der Gegenrichtung ist der Empfang der Oberflächenwelle bevorzugt.

Zum Schutz des Modenwandlers 34" vor Verschmutzung sollten dessen Einkerbungen von einem Material ausgefüllt sein, dessen akustische Eigenschaften sich von denen der Fensterscheibe wesentlich unterscheiden. Diese Maßnahme kann auch zum Schutz der schlitzartigen Reflektoren 6', 6" oder aus Gründen der optischen Unauffälligkeit ergriffen werden.

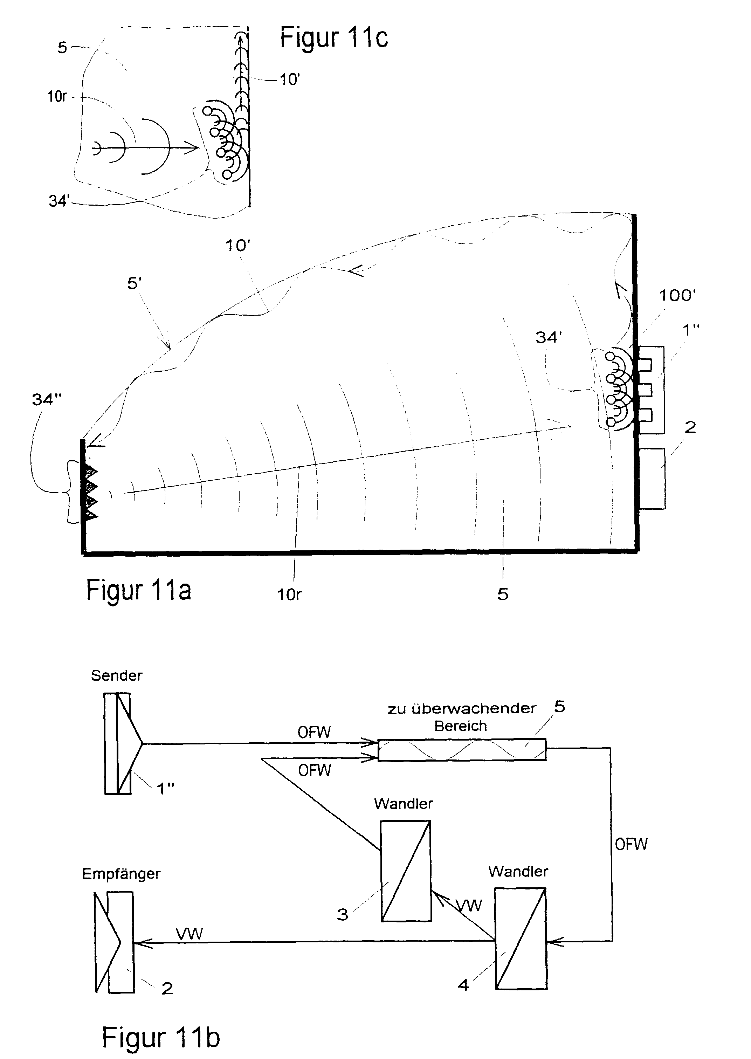

Das Ausführungsbeispiel von Figur 11a soll die Vielfalt der Gestaltungsmöglichkeiten des Erfindungsprinzips andeuten. Es kombiniert unterschiedliche Modenwandler 34' und 34", verschiedene Typen von Sender 1" und Empfänger 2 und nutzt zusätzlich einen Teil der zum Empfänger 2 rücklaufenden Volumenwelle zur erneuten Generierung von Oberflächenwellen, die denen vom Sender 1" erzeugten überlagert werden. Das Blockschaltbild von Figur 11b verdeutlich den Zustand der Wellenmoden zwischen Sender 1" und Empfänger 2 beziehungsweise des Teils der Energie, die ,im Kreis" geführt wird.

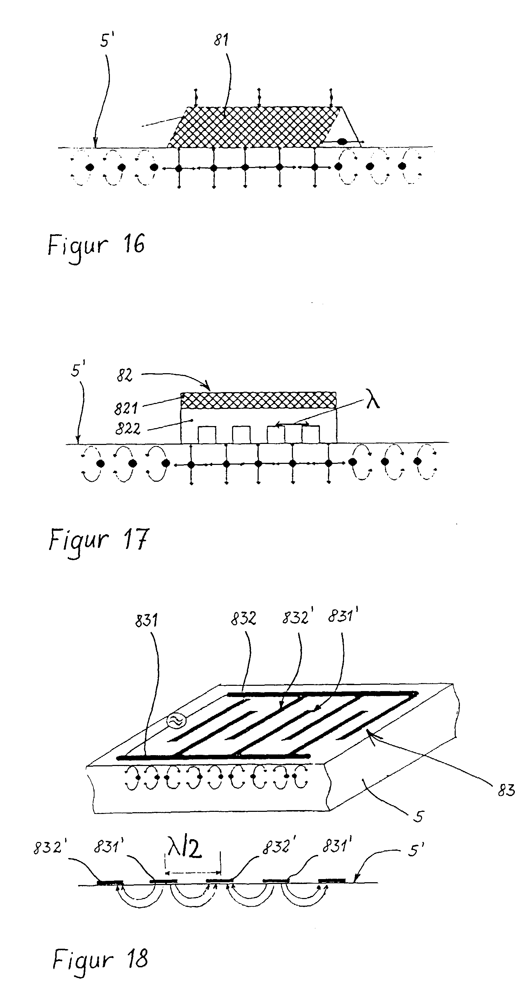

Sender 1" und Empfänger 2 sind an der rechten Scheibenkante befestigt, wobei der Sender 1" als sogenannter Kammwandler ausgebildet und oberhalb des Empfängers 2, das heißt zwischen dem zu überwachenden Bereich 5' und dem Empfänger 2, angeordnet ist. Unmittelbar gegenüber dem Sender 1", der in der Lage ist, direkt Oberflächenwellen zu erzeugen, und im Zusammenhang mit Figur 17 noch näher erläutert werden wird, befindet sich der aus einer Lochreihe bestehen de Modenwandler 34'. Gegenüber dem zum Empfang von Volumenwellen geeigneten Empfänger 2 ist in der Kontur der linken Scheibenkante ein aus Einkerbungen bestehender Modenwandler 34" angeordnet.

Die vom Sender 1" generierten Oberflächenwellen breiten sich zunächst entlang der vertikalen Scheibenkante aus und pflanzen sich dann auf der Scheibenoberkante, dem zu überwachenden Bereich 5', fort. Bei Erreichen des zweiten Modenwandlers 3, 34" wird die Oberflächenwelle in eine Volumenwelle konvertiert, die sich durch den Glaskörper der Fensterscheibe 5 zur gegenüberliegenden vertikalen Scheibenkante ausbreitet. Ein Teil der Energie der Volumenwelle führt zur Erzeugung eines Signals im Empfänger 2. Ein anderer Teil jedoch wird vom Modenwandler 34' erfaßt und zurück in eine Oberflächenwelle konvertiert, welche sich der vom Sender 1" primär erzeugten Oberflächenwelle überlagert. Dies führt zu einer Anhebung der effektiv zur Verfügung stehenden, in den zu überwachenden Bereich 5' einspeisbaren Energie.

Dies bedeutet, daß im Falle der Energieauskopplung aus dem zu überwachenden Bereich 5', zum Beispiel durch eine aufgelegte Hand, auch die am Modenwandler 34' eintreffende Energie infolge der Dämpfung verringert wäre. Somit wird auch die effektive Sendeenergie reduziert, was zu einer adäquaten Reduzierung der beim Empfänger eintreffenden Schwingungsenergie führt. Die dargestellte Schwingungsrückkopplung über den Modenwandler 3, 34" führt also zu einem Verstärkungseffekt.

Vorteilhaft ist in diesem Zusammenhang auch eine winklige Lage des Modenwandlers 34' bezüglich der zugeordneten Scheibenkante, um eine Richtwirkung des Modenwandlers 34' zu erzielen, wie im Ausschnitt gemäß Figur 11c angedeutet. Dadurch läßt sich die akustische Energie in die bevorzugte Ausbreitungsrichtung bündeln, was durch den Pfeil 10' der Ausbreitungsrichtung der Oberflächenwellen veranschaulicht werden soll. Die sich in die andere (entgegengesetzte) Richtung ausbreitenden Oberflächenwellen besitzen eine wesentlich geringere Energie.

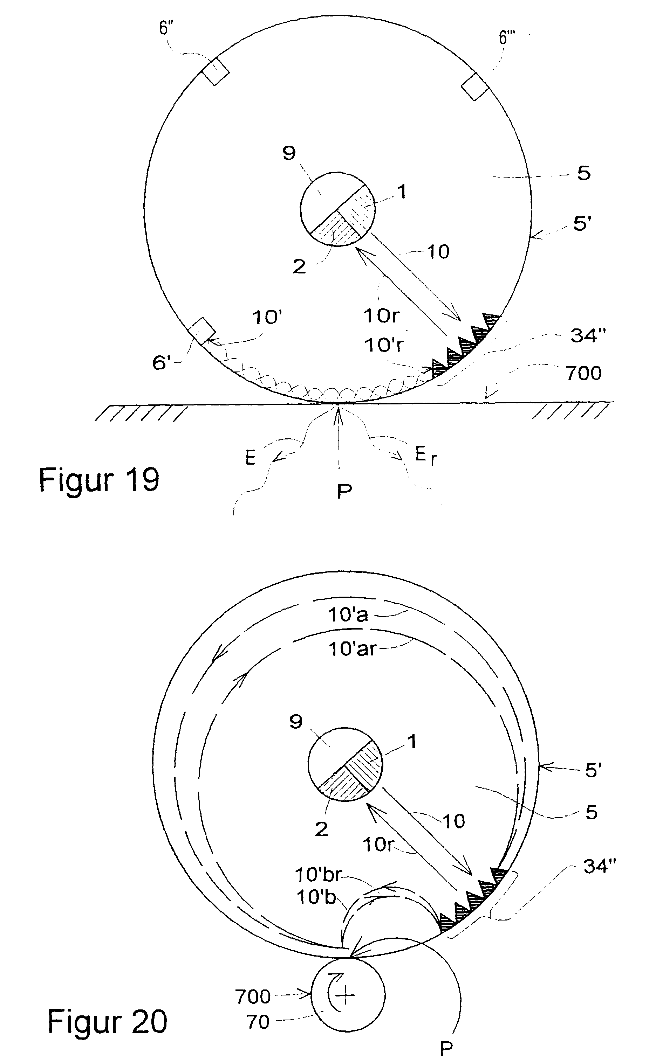

Figur 19 zeigt eine schematische Darstellung einer Vorrichtung mit einem scheibenartigen, wellenleitenden Körper 5, der auf einer drehbaren Welle 9 befestigt ist. Der Körper 5 steht in einem Berührungspunkt P mit der ebenen Kontaktfläche 700 reibschlüssig in Verbindung und kann sich bei Drehung der Welle 9 zu dieser Fläche 700 relativ bewegen. Im Inneren der Hohlwelle 9 sind ein Sender 1 und ein Empfänger 2 derart angeordnet, daß sie Volumenwellen 10 in den Körper 5 einkoppeln beziehungsweise Volumenwellen 10r empfangen können. Am Umfang des scheibenförmigen Körpers 5 sind ein Modenwandler 34 " sowie drei Kerben oder schlitzartig ausgebildete Reflektoren 6', 6", 6"' gleichmäßig verteilt angeordnet, wobei der Modenwandler 34" direkt gegenüber der Sender-/Empfänger-Einheit 1, 2 liegt. Bei einer ungleichmäßigen Verteilung der Reflektoren ist auch eine Drehrichtungserkennung möglich.

Die beschriebene Vorrichtung eignet sich zur Drehwinkelerkennung relativ zur im Berührungspunkt P kontaktierten Fläche 700, wobei angenommen werden soll, daß die Ausbreitung und der Empfang von Oberflächenwellen ausgehend vom Modenwandler in einer Richtung bevorzugt erfolgt, zum Beispiel durch Anwendung einer Modenwandlerkonfiguration gemäß Figur 11c, Figur 14 oder Figur 15.

Die vom Sender 1 ausgehende Volumenwelle 10 wird bei Erreichen des Modenwandler 34" in eine Oberflächenwelle 10' umgewandelt und breitet sich in Richtung zum Reflektor 6' aus. Ein Teil der Schwingungsenergie wird bei Erreichen des Berührungspunktes P als Verlustenergie in Form mechanischer Energie und Wärme ausgekoppelt. Die verbleibende Energie der Oberflächenwelle pflanzt sich bis zum ersten Reflektor 6' fort, wo ein Teil reflektiert wird und ein anderer Teil zum nächsten Reflektor 6" weiterläuft. Der reflektierte Anteil der Oberflächenwelle 10' gibt wiederum einen Teil seiner Schwingungsenergie beim Erreichen des Berührungspunktes P als Verlustenergie Er ab. Nur der verbleibende kleine Rest der reflektierten Oberflächenwelle 10' kann vom Modenwandler 34" in eine Volumenwelle 10r zurückgewandelt und vom Empfänger 2 sensiert werden. Aufgrund des sehr kleinen Empfangsignals schließt die Auswertelogik auf eine Berührung im Bereich zwischen dem Modenwandler 34" und dem ersten Reflektor 6' des drehbaren Körpers 5 mit der Fläche 700.

Der bezeichnete Teilbereich der Umfangsfläche 5' zwischen dem Reflektor 6' und dem Modenwandler 34" kann von den mit den übrigen Reflektoren 6", 6"' gebildeten Teilbereichen durch die unterschiedliche Laufzeit der Oberflächenwelle unterschieden werden. Dadurch ist es möglich, die beim Überwinden der teilweise durchlässigen Reflektoren 6', 6", 6"' auftretenden Energieverluste zu berücksichtigen und jedem Bereich einen entsprechend angepaßten Sollwert zur Signalbewertung zuzuordnen.

Falls die Genauigkeit der Drehwinkelerkennung lediglich 360° erfordern sollte, also mit einer Drehzahlerkennung gleichzusetzen ist, kann auf Reflektoren gänzlich verzichtet werden (nicht dargestellt). Beim Überschreiten des Berührungspunkts P über den Modenwandler 34" würde es zu einer sprunghaften Signaländerung kommen, die als Zählimpuls dienen kann.

Das Prinzip der Vorrichtung von Figur 20 verwendet eine gleichartig aufgebaute wellenleitende, drehbare Scheibe 5, die jedoch keine Reflektoren aufweist. Sie steht mit einer ebenfalls drehbar gelagerten Rolle 70 über deren Oberfläche 700 in Verbindung. Der Kontakt zwischen den beiden Teilen 5, 70 ist so beschaffen, daß dadurch eine Reflektionsstelle P für Oberflächenwellen entsteht. Aufgrund der Verhältnisses der Laufzeiten der von Modenwandler 34" einerseits ausgehenden Oberflächenwelle 10'a und ihrer reflektierten Oberflächenwelle 10'ar sowie der vom Modenwandler 34" andererseits ausgehenden Oberflächenwelle 10'b und ihrer reflektierten Oberflächenwelle 10'br kann auf die Winkelstellung des Teils 5 bezüglich der Reflektionsstelle P geschlossen werden. Zur Verdeutlichung der winkelbezogenen Wege wurde die Ausbreitung der Oberflächenwellen 10'a, 10'ar, 10'b, 10'br nicht an der Oberfläche, das heißt im Bereich der Wellenfortleitung, dargestellt, sondern durch gestrichelte Linien im Inneren des Körpers 5 symbolisiert.

Bei dem dargestellten Modenwandler 34" handelt es sich um einen in beide Richtungen gleichermaßen abstrahlenden Modenwandler. Man kann ihn aber auch so ausbilden (nicht dargestellt, vergleiche Figuren 11c, 14, 15), daß er ein asymmetrisches Verhalten mit einer bevorzugten Ausbreitungsrichtung für Oberflächenwellen aufweist. In diesem Falle kann auch ein Drehrichtungswechsel sicher erkannt werden.

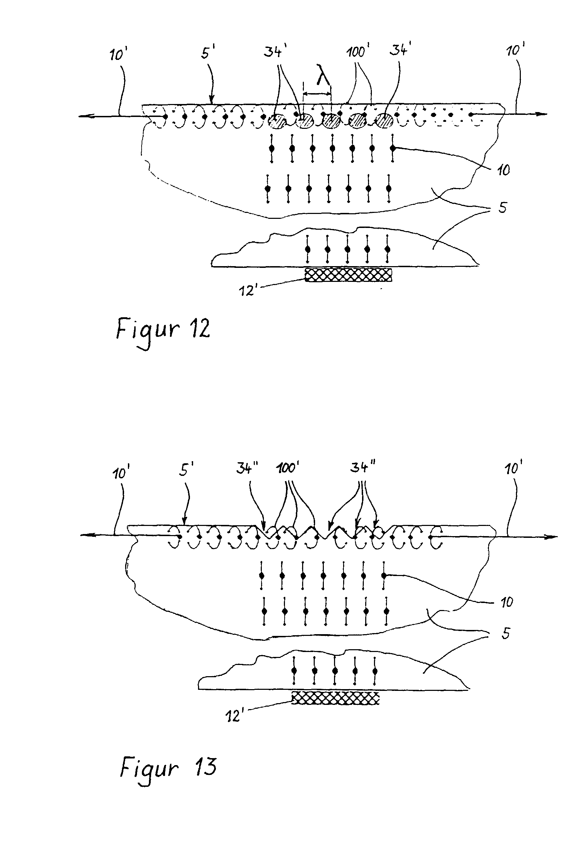

Die Figuren 12 bis 15 zeigen verschiedene Gestaltungsmöglichkeiten von Modenwandlern, deren Sender-Empfangscharakteristik zum Teil richtungsindifferent und zum Teil richtungsabhängig ist. Da die Figuren 12 und 13 lediglich vergrößerte Ausschnitte der bereits beschriebenen Figuren 9 und 10 wiedergeben, soll an dieser Stelle auf wiederholende Erläuterungen verzichtet werden. Jedoch sei darauf verwiesen, daß die voran bezeichneten Ausführungsbeispiele eine richtungsindifferente Sende-Empfangscharakteristik aufweisen.

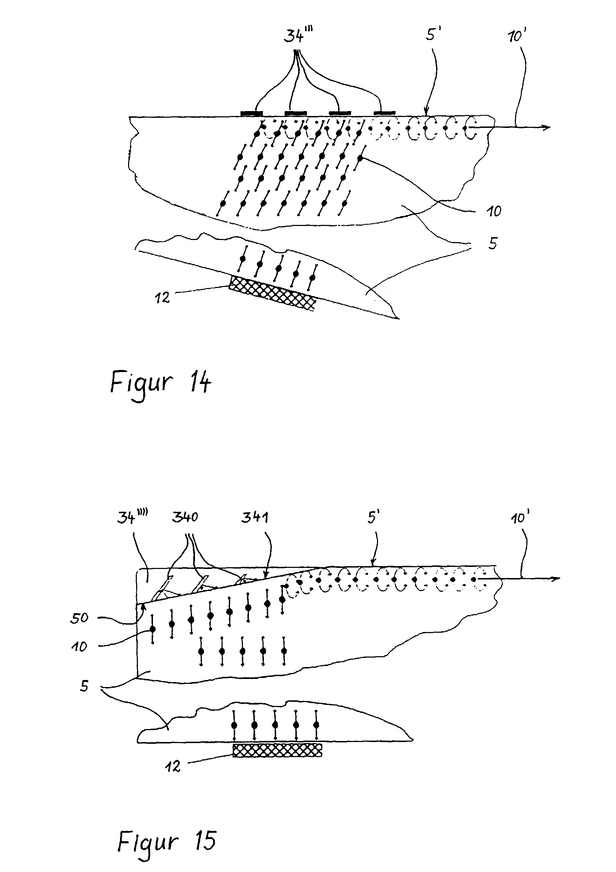

Ein Modenwandler 34"', bestehend aus mehreren auf die Scheibenkante aufgebrachten Einzelelementen, zeigt Figur 14. Der Abstand der Einzelelemente entspricht wiederum der Wellenlänge λ der zu erzeugenden Oberflächenwelle. Gegenüber den Varianten der Figuren 12 und 13 besitzt diese Auführungsform den Vorteil, daß kein Eingriff in das Material der Scheibenkante vorgenommen werden muß, was bei vorgespannten Fensterscheiben für Kraftfahrzeuge problematisch sein kann. Die Sendeebene der gegenüberliegende Sender-/Empfänger-Einheit ist bezüglich der Ebene des Modenwandlers 34"' und der ihn tragenden Scheibenkante 5' geneigt angeordnet. Somit treffen die ausgesendeten Volumenwellen in einem entsprechenden Winkel auf den Modenwandler 34"', was zu einer bevorzugten Ausbreitungsrichtung 10' der dort generierten Oberflächenwellen führt.

Auch der Empfang der Oberflächenwelle und ihre Konversion zurück in eine Volumenwelle ist aus dieser Richtung bevorzugt. Deshalb sollte ein solcher Modenwandler 34"' in Analogie zum Ausführungsbeispiel von Figur 6 an einem Ende des zu überwachenden Bereichs 5' angeordnet sein, während das andere Ende des zu überwachenden Bereichs 5' von einem Reflektor 6' flankiert ist.

Einen Modenwandler mit ebenfalls ausgeprägter Sender-Empfangscharakteristik zeigt Figur 15. Er besitzt eine keilartige Form und ist fest mit der Scheibenkante 5' über eine Koppelfläche 50 verbunden. In die zugeordnete Koppelfläche 341 des Modenwandlers 34"" sind winklig Schlitze 340 eingearbeitet, deren Abstand in etwa der Wellenlänge λ der Oberflächenwelle entspricht. Die Volumenwellen werden an der Grenzfläche (Koppelflächen 50, 341) zwischen Glaskörper 5 und Modenwandler 34"" zunächst in Richtung der Schlitze 340 gebrochen, um dort reflektiert und schließlich wieder in den Glaskörper 5 eingekoppelt zu werden. Die Überlagerung der reflektierten Wellen führt nun zur Entstehung der gewünschten Oberflächenwelle.

Sofern vom Sender direkt Oberflächenwellen generiert werden sollen, stehen verschiedene Ausführungen elektrisch-mechanischer Wandler zur Verfügung. Beispielsweise kann, wie die Prinzipdarstellung von Figur 16 zeigt, ein Piezoelektrischer Schwinger 81, der mit der Glaskante 5' fest verbunden ist, bei entsprechender Polarisation zu einer gekoppelten Dicken-Scher-Bewegung angeregt werden, so daß eine elliptische Auslenkung der Teilchen an der Grenzfläche zur Schei benkante 5' erfolgt. Dabei werden Oberflächenwellen erzeugt, die sich in beide Richtungen gleichermaßen gut ausbreiten.

Eine weitere Möglichkeit, Oberflächenwellen direkt zu erzeugen (siehe Figur 17), besteht in der Kombination eines Dickenschwingers 821 und eines kammförmigen Koppelelements 822 zu einem Kammwandler 82, wobei der Zahnabstand des Koppelelements 822 der Wellenlänge λ der Oberflächenwelle entsprechen soll. Die Schneiden der Zähne stehen in fester Verbindung mit der Scheibenkante 5' und sind Quellen von Elementarwellen, die sich gleichphasig überlagern. Auch hier ist die Ausbreitungscharakteristik der Oberflächenwellen richtungsindifferent.

Figur 18 zeigt die Prinzipdarstellung eines auf einem Festkörper 5 aufgeklebten Interdigitalwandlers 83, dessen Elektroden 831, 832 auf einer Piezokeramik aufgebracht oder über eine zusätzliche Koppelelektrode mit der Piezokeramik verbunden sind. Die abwechselnd angeordneten Elektrodenfinger 831', 832' besitzen wiederum einen Abstand von λ/2. Die Oberflächenwelle entsteht durch Überlagerung zweier fortschreitender Wellen entgegengesetzter Ausbreitungsrichtung.

### Bezugszeichenliste

- 1: Sender von Volumenwellen
- 1': Sender von Oberflächenwellen
- 1": Sender von Oberflächenwellen, Interdigitaler Aufbau
- 10: Ausbreitungsrichtung von Volumenwellen
- 10r: Ausbreitungsrichtung von Volumenwellen
- 10'a: Ausbreitungsrichtung der hinlaufenden Oberflächenwelle (langer Weg)
- 10'ar: Ausbreitungsrichtung der rücklaufenden Oberflächenwelle (langer Weg)
- 10'b: Ausbreitungsricht ung der hinlaufenden Oberflächenwelle (kurzer Weg)
- 10'br: Ausbreitungsrichtung der rücklaufenden Oberflächenwelle (kurzer Weg)
- 10': Ausbreitungsrichtung der Oberflächenwellen
- 10'r: Ausbreitungsrichtung der Oberflächenwellen
- 10": Ausbreitungsrichtung der Oberflächenwellen
- 10"r: Ausbreitungsrichtung der Oberflächenwellen
- 12: Sender/Empfänger-Einheit
- 12': Sender/Empfänger-Einheit

- 100': Elementarwelle
- 2: Empfänger von Volumenwellen
- 2': Empfänger von Oberflächenwellen

- 3: Modenwandler (VW in OFW)4
- 34: Modenwandler (VW in OFW und zurück von OFW in VW)
- 34': Modenwandler
- 34": Modenwandler
- 34"': Modenwandler
- 34"": Modenwandler
- 340: Schlitz
- 341: Kante, Koppelfläche

- 4: Modenwandler (OFW in VW)
- 5: Fensterscheibe/wellenleitender Körper
- 5': zu überwachender Bereich
- 50: Kante, Koppelfläche

- 6: Reflektor
- 6': Kerbe
- 6": Kerbe
- 6"': Kerbe

- 7: Führungselement
- 70: Rolle oder dergleichen
- 700: Oberfläche/Kontaktfläche

- 81: Dicken-Scherschwinger
- 82: Kammwandler
- 821: Dickenschwinger
- 822: kammförmiges Koppelelement
- 83: Interdigitalwandler
- 831: Elektrode
- 831': Elektrodenfinger
- 832: Elektrode
- 832': Elektrodenfinger

- 9: Welle
- d: Tiefe der Einkerbungen
- s: Abstand der Einzelelemente des Modenwandlers zur Scheibenkante
- t: Teilung der Einzelelemente des Modenwandlers
- t': Teilung der Einzelelemente des Modenwandlers
- λ: Wellenlänge der Oberflächenwelle

- E: Verlustenergie der hinlaufenden Oberflächenwelle
- Er: Verlustenergie der rücklaufenden Oberflächenwelle
- P: Berührungspunkt, Reflektionsstelle
- OFW: Oberflächenwelle
- VW: Volumenwelle

## Patentansprüche

1. Vorrichtung zur Steuerung eines von einer motorischen Antriebseinheit betätigten Verstellobjekts, zum Beispiel einer Fensterscheibe oder eines Schiebedaches eines Kraftfahrzeugs oder dergleichen, unter Verwendung eines Senders in Form eines elektrisch-mechanischen Wandlers, der im Material des Verstellobjekts Schwingungen auslöst, wobei sich entlang der Oberfläche eines zu überwachenden Bereichs eine Oberflächenwelle ausbreitet, und unter Verwendung eines Empfängers in Form eines mechanisch-elektrischen Wandlers, der akustische Schwingungen empfängt, sowie einer elektronischen Steuer- und Auswerteeinheit, die zur Ansteuerung von Sender und Empfänger sowie zur Ansteuerung der motorischen Antriebseinheit auf der Basis der ausgewerteten Signale vorgesehen ist,
**dadurch gekennzeichnet,**
daß in Wirkverbindung zum zu überwachenden Bereich (5, 5') oder zu einem mit diesem Bereich (5, 5') verbundenen Bereich wenigstens ein Modenwandler (3, 4, 34, 34' 34", 34"', 34"") angeordnet ist, der
a) eine zum Überwachungsbereich (5, 5') laufende Volumenwelle in eine Oberflächenwelle konvertiert
und/oder
b) eine zum Empfänger laufende Oberflächenwelle in eine Volumenwelle konvertiert.

2. Vorrichtung nach Anspruch 1, **dadurch gekennzeichnet**, daß der Modenwandler (34', 34", 34"', 34"") aus mehreren periodisch angeordneten Elementen besteht, die entlang der Ausbreitungsrichtung der Oberflächenwelle angeordnet sind und eine Teilung t aufweisen, die annähernd der Wellenlänge λ der Oberflächenwelle entspricht.

3. Vorrichtung nach Anspruch 2, **dadurch gekennzeichnet**, daß der Modenwandler (34') in Form einer Lochreihe in den Scheibenkörper (5) integriert ist.

4. Vorrichtung nach Anspruch 2, **dadurch gekennzeichnet**, daß der Modenwandler (34") in Form von periodisch angeordneten, symmetrisch oder asymmetrisch ausgebildeten Zähnen oder Kerben in die Scheibenkantengeometrie integriert ist.

5. Vorrichtung nach Anspruch 2, **dadurch gekennzeichnet**, daß der Modenwandler von zusätzlichen, separaten Teilen gebildet ist, die auf der Scheibenkante angeordnet sind.

6. Vorrichtung nach Anspruch 5, **dadurch gekennzeichnet**, daß der Modenwandler (34"') von Einzelelementen gebildet ist, die in einem Abstand λ der Oberflächenwellen fest mit der Scheibenkante (5') verbunden sind, wobei die Senderichtung (10) der Volumenwelle winklig zur Scheibenkante verläuft.

7. Vorrichtung nachf Anspruch 5, **dadurch gekennzeichnet,** daß der Modenwandler (34"") von einem auf der Scheibenkante (5') aufgesetzten Keil gebildet ist, in dessen Kontaktfläche (341) Schlitze mit einem Abstand λ der Oberflächenwellen eingearbeitet sind, die gegenüber der Senderichtung (10) der Volumenwelle eine Neigung aufweisen.

8. Vorrichtung nach wenigstens einem der voranstehenden Ansprüche, **dadurch gekennzeichnet**, daß der Modenwandler (34') an einem Ende des zu überwachenden Bereichs (5') und ein Reflektor (6') am anderen Ende des zu überwachenden Bereichs (5') angeordnet ist, wobei der Modenwandler (34') in beiden Ausbreitungsrichtungen der akustischen Wellen wirksam ist, und daß eine einteilige Sende-/Empfänger-Einheit (12') zum Erzeugen und Empfangen von Volumenwellen vorgesehen ist.

9. Vorrichtung nach wenigstens einem der Ansprüche 1 bis 7, **dadurch gekennzeichnet**, daß der Modenwandler (34') an einem Ende des zu überwachenden Bereichs und ein Empfänger (2') für Oberflächenwellen am anderen Ende des zu überwachenden Bereichs (5') angeordnet ist, und daß ein einfacher Dickenschwinger zur Erzeugung von Volumenwellen als Sender (1) vorgesehen ist.

10. Vorrichtung nach wenigstens einem der Ansprüche 1 bis 7, **dadurch gekennzeichnet**, daß an dem einen Ende des zu überwachenden Bereichs (5') ein Sender (1') zur Erzeugung von Oberflächenwellen und am anderen Ende des zu überwachenden Bereichs (5') ein Modenwandler (34') zur Umwandlung der Oberflächenwellen in Volumenwellen vorgesehen ist, wobei in der Hauptausbreitungsrichtung (10r) der Volumenwelle ein Empfänger (2) angeordnet ist.

11. Vorrichtung nach wenigstens einem der Ansprüche 1 bis 7, **dadurch gekennzeichnet,** daß der zu überwachende Bereich (5') von jeweils einem Reflektor (6', 6") begrenzt ist und daß zwischen den Reflektoren ein Modenwandler (34', 34") für beide Ausbreitungsrichtungen der akustischen Wellen angeordnet ist, dem eine einteilige Sende-/Empfänger-Einheit (12') zur Erzeugung beziehungsweise zum Empfang von Volumenwellen zugeordnet ist.

12. Vorrichtung nach wenigstens einem der Ansprüche 1 bis 7, **dadurch gekennzeichnet**, daß dem einem Ende des zu überwachenden Bereichs (5') ein Sender (1") zur Erzeugung von Oberflächenwellen sowie ein erster Modenwandler (34') zur Umwandlung von Volumenwellen in Oberflächenwellen und dem anderen Ende des zu überwachenden Bereichs (5') ein zweiter Modenwandler (34") zur Umwandlung von Oberflächenwellen in Volumenwellen vorgesehen ist, wobei die Volumenwelle mit der Ausbreitungsrichtung (10r) zum Teil auf den ersten Modenwandler (34') und zum Teil auf den Empfänger (2) trifft.

13. Vorrichtung nach wenigstens einem der voranstehenden Ansprüche, **dadurch gekennzeichnet**, daß als Sender (1") ein kammartig gestalteter Dickenschwinger vorgesehen ist, wobei die freien Enden des Kammes mit der Scheibenkante in Verbindung stehen.

14. Vorrichtung nach wenigstens einem der voranstehenden Ansprüche, **dadurch gekennzeichnet,** daß als Sender ein Interdigitalwandler (83) als Sender und/oder Empfänger vorsehen ist.

15. Vorrichtung nach wenigstens einem der voranstehenden Ansprüche, **gekennzeichnet durch** ihre Verwendung für einen Einklemmschutz eines motorisch betätigten Schließteils, insbesondere einer Fensterscheibe eines Kraftfahrzeugs.

16. Vorrichtung nach wenigstens einem der voranstehenden Ansprüche, **gekennzeichnet durch** ihre Verwendung zur Erkennung der Position und/oder der Verstellgeschwindigkeit eines drehbar gelagerten Teils.

17. Vorrichtung nach Anspruch 16, **dadurch gekennzeichnet,** daß die äußere Mantelfläche des drehbar gelagerten Teils mit einer feststehenden oder beweglichen Kontaktfläche reibschlüssig in Verbindung steht, wobei im Kontaktpunkt eine Reflexionsstelle oder eine Stelle zur Energieauskopplung gebildet ist, und daß der Modenwandler im Wirkungsbereich der Mantelfläche angeordnet ist, dem in der Drehachse des Teils ein Sender und ein Empfänger für Volumenwellen zugeordnet ist.

18. Vorrichtung nach Ansprüchen 16 und 17, **dadurch gekennzeichnet**, daß die Mantelfläche des drehbar gelagerten Teils durch Reflektoren in mehrere Meßabschnitte unterteilt ist.

19. Verfahren zur Steuerung eines von einer motorischen Antriebseinheit betätigten Verstellobjekts eines Kraftfahrzeugs, zum Beispiel einer Fensterscheibe, eines Schiebedaches oder dergleichen, wobei von einem Sender in Form eines elektrisch-mechanischen Wandlers Schwingungsenergie in das Verstellobjekt eingekoppelt wird, von der sich ein Teil als akustische Oberflächenwelle entlang eines zu überwachenden Bereichs, zum Beispiel der Scheibenkante, ausbreitet, und unter Verwendung eines Empfängers in Form eines mechanisch-elektrischen Wandlers zur Sensierung der einfallenden Schwingungsenergie und einer elektrischen Einrichtung zur Auswertung der Empfängersignale sowie zur Ansteuerung des Senders und der Antriebseinheit,
**dadurch gekennzeichnet,**
daß die vom Sender ausgehende akustische Welle auf ihrem Weg zum Empfänger wenigstens einmal einen Modenwandler (34, 34', 34", 34"', 34"") durchläuft, wobei ihre Mode verändert wird.

20. Verfahren nach Anspruch 19, **dadurch gekennzeichnet**, daß
- an einer nicht zum Überwachungsbereich (5') gehörenden Kante einer Fensterscheibe (5) eine Volumenwelle,vorzugsweise eine Longitudinalwelle erzeugt wird,
- die Volumenwelle auf einen Modenwandler (34, 34', 34", 34"', 34"") im Wirkungsbereich des zu überwachenden Bereichs (5') trifft, wo ein Teil ihrer Energie in eine Oberflächenwelle umgewandelt wird, die sich auf der zu überwachenden Oberfläche (5') ausbreitet,
- die Oberflächenwelle am Ende des zu überwachenden Bereichs (5') reflektiert wird und in Richtung des Modenwandlers (34, 34', 34", 34"', 34"") zurückläuft,
- die reflektierte Oberflächenwelle in eine Volumenwelle zurückkonvertiert wird,
- die Energie der reflektierten und konvertierten Welle von einer Empfangseinheit (2,12') gemessen und
- das Meßsignal in einer elektronischen Auswerteeinheitbewertet wird.

## Claims

1. Device for controlling a displaceable object operated by a motorized drive unit, for example a window pane or sliding roof of a motor vehicle or the like, using a transmitter in the form of an electrical-mechanical converter which triggers vibrations in the material of the displaceable object whereby a surface wave is spread out along the surface of an area to be monitored, and using a receiver in the form of a mechanical-electrical converter which receives acoustic vibrations, as well as an electronic control and evaluation unit which is provided to control the transmitter and receiver and to control the motorized drive unit on the basis of the evaluated signals, characterised in that at least one mode converter (3, 4, 34, 34', 34", 34"', 34"") is mounted in active connection with the area (5, 5') to be monitored or with an area to be connected to this area (5, 5'), whereby the mode converter
a) converts a volume wave running to the monitoring area (5, 5') into a surface wave and/or
b) converts a surface wave running to the receiver into a volume wave.

2. Device according to claim 1 characterised in that the mode converter (34', 34 ", 34"', 34"") consists of several periodically arranged elements which are mounted along the expansion direction of the surface wave and have a division t which corresponds approximately to the wave length λ of the surface wave.

3. Device according to claim 2 characterised in that the mode converter (34') is integrated in the pane body (5) in the form of a row of holes.

4. Device according to claim 2 characterised in that the mode converter (34'') is integrated in the geometry of the window pane edge in the form of periodically arranged symmetrically or asymmetrically formed teeth or notches.

5. Device according to claim 2 characterised in that the mode converter is formed by additional separate parts which are arranged on the pane edge.

6. Device according to claim 5 characterised in that the mode converter (34"') is formed by individual elements which are connected fixed to the edge (5') of the window pane at a spacing λ of the surface waves whereby the transmitting direction (10) of the volume wave runs at an angle to the edge of the pane.

7. Device according to claim 5 characterised in that the mode converter (34"") is formed by a wedge set on the edge (5') of the pane wherein slits are formed in the contact face (341) of the wedge at a spacing of the surface waves which have an incline relative to the transmitting direction (10) of the volume wave.

8. Device according to at least one of the preceding claims characterised in that the mode converter (34') is mounted at one end of the area (5') to be monitored and a reflector (6') is mounted at the other end of the area (5') to be monitored, whereby the mode converter (34') is active in both spreading directions of the acoustic waves and that a one-piece transmitter/receiver unit (12') is provided for producing and receiving volume waves.

9. Device according to at least one of claims 1 to 7 characterised in hat the mode converter (34') is mounted at one end of the area to be monitored and a receiver (2') for the surface waves is mounted at the other end of the area (5') to be monitored and that a simple thickness vibrator is provided as transmitter (1) to produce volume waves.

10. Device according to at least one of claims 1 to 7 characterised in that a transmitter (1') for producing surface waves is provided at one end of the area (5') to be monitored and a mode converter (34') for converting the surface waves into volume waves is provided at the other end of the area (5') to be monitored whereby a receiver (2) is mounted in the main spreading direction (10r) of the volume wave.

11. Device according to at least one of claims 1 to 7 characterised in that the area (5') to be monitored is defined each time by a reflector (6',6") and that a mode converter (34', 34") is mounted between the reflectors for both spreading directions of the acoustic waves and is associated with a one-piece transmitter/receiver unit (12') to produce or receive volume waves.

12. Device according to at least one of claims 1 to 7 characterised in that at one end of the area (5') there is a transmitter (1") for producing surface waves as well as a first mode converter (34') for converting volume waves into surface waves and at the other end of the area (5') to be monitored there is a second mode converter (34") for converting surface waves into volume waves wherein the volume wave with the expansion direction (10r) strikes the first mode converter (34') with one part and the receiver (2) with the other part.

13. Device according to at least one of the preceding claims characterised in that a comb-like thickness vibrator is provided as the transmitter (1") whereby the free ends of the comb connect with the edge of the window pane.

14. Device according to at least one of the preceding claims characterised in that an interdigital converter (83) is provided as transmitter and/or receiver.

15. Device according to at least one of the preceding claims characterised by its use for an anti-jam protection aid for a motor-operated closing member, more particularly of a window pane of a motor vehicle.

16. Device according to at least one of the preceding claims characterised by its use to detect the position and/or displacement speed of a rotary mounted part.

17. Device according to claim 16 characterised in that the outer sleeve face of the rotary mounted part is in friction locking connection with a fixed or movable contact face wherein a reflection point or a point for uncoupling energy is formed at the contact point and that the mode converter is mounted in the active area of the sleeve face associated with a transmitter and receiver for volume waves in the rotary axis of the part.

18. Device according to claim 16 and 17 characterised in that the sleeve face of the rotary mounted part is divided by reflectors into several measuring sections.

19. Method for controlling a displacement object of a motor vehicle operated by a motorized drive unit, for example a window pane, or a sliding roof or the like, whereby vibration energy is fed into the displacement object by a transmitter in the form of an electrical-mechanical converter wherein a part of the energy spreads out as acoustic surface wave along an area to be monitored, for example the edge of a window pane, and with the use of a receiver in the form of a mechanical-electrical converter for sensing the incoming vibration energy and an electrical device for evaluating the receiver signals and for controlling the transmitter and the drive unit, characterised in that the acoustic wave emanating from the transmitter runs at least once through a mode converter (34, 34', 34", 34"', 34"") on its way to the receiver whereby its mode is changed.

20. Method according to claim 19 characterised in that
- a volume wave, preferably a longitudinal wave, is produced on an edge of a window pane (5) not belonging to the monitoring area (5'),
- the volume wave strikes a mode converter (34, 34', 34", 34"', 34"") in the active area of the area (5') to be monitored where a part of its energy is converted into a surface wave which is spread out over the surface (5') to be monitored;
- the surface wave is reflected at the end of the area (5') to be monitored and runs back in the direction of the mode converter (34, 34', 34", 34"', 34"")
- the reflected surface wave is converted back into a volume wave
- the energy of the reflected and converted wave is measured by a receiver unit (2, 12') and
- the measuring signal is evaluated in an electronic evaluator unit.

## Revendications

1. Dispositif pour la commande d'un objet déplaçable actionné par une unité d'entraînement motorisée, par exemple une vitre de fenêtre, ou bien un toit coulissant dans un véhicule automobile ou similaire, en utilisant un émetteur sous la forme d'un transformateur électrique/mécanique, lequel déclenche des oscillations dans le matériau de l'objet déplaçable, et une onde de surface se propage le long de la surface d'une zone à surveiller, et en utilisant un émetteur sous la forme d'un convertisseur mécanique/électrique, lequel reçoit des oscillations acoustiques, ainsi qu'une unité électronique de commande et d'évaluation, prévue pour piloter l'émetteur et le récepteur ainsi que pour piloter l'unité d'entraînement motorisée en se basant sur les signaux évalués,
caractérisé en ce que,
il est prévu au moins un convertisseur de mode (3, 4, 34, 34', 34", 34"', 34"") agencé en relation active vis-à-vis de la zone à surveiller (5, 5') ou bien vis-à-vis d'une zone reliée à cette zone (5, 5'), ledit convertisseur de mode :
a) convertissant une onde de volume qui circule dans la région à surveiller (5, 5') en une onde de surface,
et/ou
b) convertissant une onde de surface qui circule vers le récepteur en une onde de volume.

2. Dispositif selon la revendication 1, caractérisé en ce que le convertisseur de mode (34', 34", 34"', 34"") est constitué de plusieurs éléments agencés de manière périodique, qui sont agencés le long de la direction de propagation de l'onde de surface et présentent un pas t, qui correspond approximativement à la longueur d'onde λ de l'onde de surface.

3. Dispositif selon la revendication 2, caractérisé en ce que le convertisseur de mode (34') est intégré dans le corps de vitre (5) sous la forme d'une rangée de trous.

4. Dispositif selon la revendication 2, caractérisé en ce que le convertisseur de mode (34") est intégré dans la géométrie de bordure de vitre, sous la forme de dents ou d'entailles agencées de façon périodique et réalisées de manière symétrique ou asymétrique.

5. Dispositif selon la revendication 2, caractérisé en ce que le convertisseur de mode est formé par des pièces additionnelles séparées qui sont agencées sur la bordure de la vitre.

6. Dispositif selon la revendication 5, caractérisé en ce que le convertisseur de mode (34"') est formé par des éléments individuels, reliés fermement à la bordure de vitre (5') à une distance λ de l'onde de surface, et la direction d'émission (10) de l'onde de volume s'étend sous un angle vis-à-vis de la bordure de la vitre.

7. Dispositif selon la revendication 5, caractérisé en ce que le convertisseur de mode (34"") est formé par un coin posé sur la bordure de vitre (5'), des fentes étant ménagées dans la surface de contact (341) dudit coin, à une distance λ de l'onde de surface, lesdites fentes présentant une inclinaison vis-à-vis de la direction d'émission (10) de l'onde de volume.

8. Dispositif selon l'une au moins des revendications précédentes, caractérisé en ce que le convertisseur de mode (34') est agencé à une extrémité de la zone à surveiller (5'), et un réflecteur (6') est agencé à l'autre extrémité de la zone à surveiller (5'), ledit convertisseur de mode (34') agissant dans les deux directions de propagation des ondes acoustiques, et en ce qu'il est prévu une unité à émetteur/récepteur d'une seule pièce (12') pour produire et recevoir des ondes de volume.

9. Dispositif selon l'une au moins des revendications 1 à 7, caractérisé en ce que le convertisseur de mode (34') est agencé à une extrémité de la zone à surveiller, et un récepteur (2') pour des ondes de surface est agencé à l'autre extrémité de la zone à surveiller (5'), et en ce qu'il est prévu en tant qu'émetteur (1) un simple élément oscillant dans son épaisseur pour produire des ondes de volume.

10. Dispositif selon l'une au moins des revendications 1 à 7, caractérisé en ce qu'il est prévu à une extrémité de la zone à surveiller (5') un émetteur (1') pour produire des ondes de surface et à l'autre extrémité de la zone à surveiller (5') un convertisseur de mode (34') pour convertir les ondes de surface en ondes de volume, et en ce qu'un récepteur (2) est agencé dans la direction de propagation principale (10r) des ondes de volume.

11. Dispositif selon l'une au moins des revendications 1 à 7, caractérisé en ce que la zone à surveiller (5') est délimitée par un réflecteur respectif (6', 6"), et en ce qu'il est prévu un convertisseur de mode (34', 34") agencé entre les réflecteurs, pour les deux directions de propagation des ondes acoustiques, auquel est associée une unité émetteur/récepteur (12') d'une seule pièce pour produire, ou respectivement recevoir, des ondes de volume.

12. Dispositif selon l'une au moins des revendications 1 à 7, caractérisé en ce qu'il est prévu à une extrémité de la zone à surveiller (5') un émetteur (1") pour produire des ondes de surface, ainsi qu'un premier convertisseur de mode (34') pour convertir des ondes de volume en ondes de surface, et en ce qu'il est prévu à l'autre extrémité de la zone à surveiller (5') un deuxième convertisseur de mode (34") pour convertir des ondes de surface en ondes de volume, et en ce que l'onde de volume dans la direction de propagation (10r) parvient en partie sur le premier convertisseur de mode (34') et en partie sur le récepteur (2).

13. Dispositif selon l'une au moins des revendications précédentes, caractérisé en ce qu'il est prévu comme émetteur (1") un élément oscillant dans son épaisseur réalisé en forme de peigne, et en ce que les extrémités libres du peigne sont reliées à la bordure de la vitre.

14. Dispositif selon l'une au moins des revendications précédentes, caractérisé en ce qu'il est prévu comme émetteur un convertisseur numérique mixte (83) en tant qu'émetteur et/ou récepteur.

15. Dispositif selon l'une au moins des revendications précédentes, caractérisé en ce qu'il est appliqué à une sécurité anti-coincement d'une partie de fermeture actionnée de façon motorisée, en particulier une vitre de fenêtre dans un véhicule automobile.

16. Dispositif selon l'une au moins des revendications précédentes, caractérisé en ce qu'il est appliqué à la reconnaissance de la position et/ou de la vitesse de déplacement d'une pièce montée en rotation.

17. Dispositif selon la revendication 16, caractérisé en ce que la surface enveloppe extérieure de la pièce montée en rotation est en liaison à coopération de friction avec une surface de contact fixe ou mobile, un emplacement de réflexion, ou bien un emplacement de couplage d'énergie étant formé au point de contact, et en ce que le convertisseur de mode est agencé dans la région d'action de la surface enveloppe, un émetteur et un récepteur pour des ondes de volume étant associés à ce convertisseur sur l'axe de rotation de la pièce.

18. Dispositif selon les revendications 16 et 17, caractérisé en ce que la surface enveloppe de la pièce montée en rotation est subdivisée en plusieurs tronçons de mesure au moyen de réflecteurs.

19. Procédé pour commander un objet déplaçable actionné par une unité d'entraînement motorisée, par exemple une vitre de fenêtre, un toit coulissant, ou similaire, dans lequel de l'énergie oscillatoire est amenée par couplage dans l'objet déplaçable depuis un émetteur sous la forme d'un convertisseur électrique/mécanique, une partie de ladite énergie se propageant sous forme d'onde de surface acoustique le long d'une zone à surveiller, par exemple la bordure de la vitre, et dans lequel on utilise un récepteur sous la forme d'un convertisseur mécanique/électrique pour détecter l'énergie oscillatoire incidente, et un système électrique pour exploiter les signaux reçus ainsi que pour piloter l'émetteur et l'unité d'entraînement,
caractérisé en ce que
les ondes acoustiques partant de l'émetteur traversent sur leur chemin vers le récepteur au moins une fois un convertisseur de mode (34, 34', 34", 34"', 34""), de sorte que leur mode est modifié.

20. Procédé selon la revendication 19, caractérisé en ce que :
- au niveau d'une bordure d'une fenêtre de vitre de fenêtre (5), qui n'appartient pas à la zone à surveiller (5'), on produit une onde de volume, de préférence une onde longitudinale,
- l'onde de volume tombe sur un convertisseur de mode (34, 34', 34", 34"', 34"") dans la zone d'action de la zone à surveiller (5'), une partie de son énergie étant convertie en une onde de surface qui se propage sur la surface à surveiller (5'),
- l'onde de surface est réfléchie à l'extrémité de la zone à surveiller (5') et retourne en direction du convertisseur de mode (34, 34', 34", 34"', 34""),
- l'onde de surface réfléchie est reconvertie en une onde de volume,
- l'énergie de l'onde réfléchie et convertie est mesurée par une unité réceptrice (2, 12'), et
- le signal de mesure est exploité dans une unité d'évaluation électronique.
